# EUROPÄISCHE PATENTSCHRIFT

(11) **EP 3 527 058 B1**
(45) Veröffentlichungstag und Bekanntmachung des Hinweises auf die Patenterteilung: **10.08.2022**
(21) Anmeldenummer: 18207945.9
(22) Anmeldetag: 23.11.2018
(51) Int. Cl.: A01D 41/12, A01D 43/08, B60R 11/06

(54) **LANDWIRTSCHAFTLICHE ARBEITSMASCHINE**
AGRICULTURAL MACHINE
ENGIN AGRICOLE

(30) Priorität: 15.02.2018 DE 102018103384
(43) Veröffentlichungstag der Anmeldung: 21.08.2019
(73) Patentinhaber: CLAAS Selbstfahrende Erntemaschinen GmbH, 33428 Harsewinkel (DE)
(72) Erfinder: Philippsen, Viktor, 49504 Lotte (DE)
(74) Vertreter: CLAAS Gruppe

(56) Entgegenhaltungen:
- EP-A2- 0 156 338
- EP-B2- 1 518 453
- DE-A1- 19 724 394
- GB-A- 224 748
- JP-A- H11 151 023

## Beschreibung

Die vorliegende Anmeldung betrifft eine landwirtschaftliche Arbeitsmaschine gemäß dem Oberbegriff von Anspruch 1.

Eine derartige Arbeitsmaschine kann beispielsweise von einem Mähdrescher oder einem Feldhäcksler gebildet sein. In jedem Fall umfasst die Arbeitsmaschine ein Fahrwerk, mit dem sie auf einem Untergrund, insbesondere einem Feld, fahren kann. Weiterhin umfasst die Arbeitsmaschine ein Schneidorgan, mittels dessen Pflanzen geschnitten werden können. Ein solches Schneidorgan kann beispielsweise einen Mähbalken umfassen, der je nach Ausgestaltung zum Schneiden von Maispflanzen, Weizen- und/oder Gerstenpflanzen geeignet ist. Selbstverständlich ist es ebenso denkbar, dass das Schneidorgan zum Schneiden sonstiger Pflanzen ausgebildet ist. Die Arbeitsmaschine umfasst weiterhin mindestens ein Arbeitsorgan, mittels dessen die geschnittenen Pflanzen bearbeitbar sind. Im Falle eines Feldhäckslers kann beispielsweise mindestens ein Arbeitsorgan von einem Häckselorgan gebildet sein, mittels dessen die geschnittenen Pflanzen gehäckselt werden. Bei einem Mähdrescher wird hingegen mindestens ein Dreschorgan verwendet, mittels dessen Früchte, insbesondere Körner, von den Pflanzen lösbar sind, sodass die Früchte separat gewonnen und sodann getrennt von Pflanzenresten weiterverarbeitet werden können. Um die einzelnen Organe der Arbeitsmaschine mit mechanischer und/oder elektrischer Energie zu versorgen umfasst die Arbeitsmaschine eine Verbrennungskraftmaschine, die entsprechende Energie zur Verfügung stellt.

Eine Arbeitsmaschine der eingangs beschriebenen Art ist im Stand der Technik bereits bekannt. Hierzu wird beispielhaft auf die Europäische Patentschrift EP 1 518 453 B2 verwiesen. Diese betrifft eine landwirtschaftliche Arbeitsmaschine in Form eines Feldhäckslers, die mit einer Speichervorrichtung ausgestattet ist. Die Speichervorrichtung umfasst wiederum ein Behältnis, das in die Karosserie der Arbeitsmaschine integriert ist. Das Behältnis dient zur Aufnahme von flüssigem Siliermittel. Die genannte Schrift befasst sich mit der Problematik, eine entsprechende Speichervorrichtung bauraumsparend an oder in der Karosserie der Arbeitsmaschine anzuordnen. Erfindungsgemäß wird die Speichervorrichtung bzw. ihr Behältnis unterhalb des Schwerpunkts der Arbeitsmaschine positioniert. Weiterhin geht der Oberbegriff von Anspruch 1 daraus hervor.

Um landwirtschaftliche Arbeitsmaschinen grundsätzlich wirtschaftlich betreiben zu können, ist es von besonderer Bedeutung, Wartung- und Ausfallzeiten der Arbeitsmaschinen möglichst gering zu halten. Dabei sind bestimmte Wartungsintervalle und Reparaturarbeiten grundsätzlich kaum oder sogar gar nicht vermeidbar, da jede Arbeitsmaschine eine Vielzahl von Verschleißteilen umfasst, die im Zuge des bestimmungsgemäßen Einsatzes der Arbeitsmaschine abgenutzt werden und schließlich ausgetauscht werden müssen. Nicht selten sind ein solcher Austausch und eine damit einhergehende Reparatur der Arbeitsmaschine unmittelbar während des Einsatzes auf dem Feld nötig. Dies kann beispielsweise Klingen des Schneidorgans betreffen, die aufgrund ihres fortwährenden Einsatzes mit der Zeit abstumpfen und dadurch unbrauchbar werden.

Ein typisches Vorgehen zur Behebung derartiger Schäden besteht in der Praxis darin, das benötigte Ersatzteil herbeizuschaffen und sodann entweder in Eigenleistung von dem jeweiligen Landwirt oder Lohnunternehmer oder alternativ von einem Servicetechniker des Herstellers der Arbeitsmaschine austauschen zu lassen. Um die Dauer zur Bearbeitung des jeweiligen Schadens möglichst kurz zu halten, werden regelmäßig benötigte Ersatzteile oftmals unmittelbar an oder in der Arbeitsmaschine mitgeführt, sodass im Schadensfall die Reparatur möglichst frei von Wartezeiten oder Beschaffungszeiten für das jeweilige Ersatzteil erfolgen kann. Die Praxis zeigt gleichwohl, dass im Zuge des hektischen und stressigen Arbeitsalltags oftmals Ersatzteile vergessen oder falsche Ersatzteile auf die Arbeitsmaschine geladen werden. Auch kommt es nicht selten vor, dass bereits mindestens ein passendes Ersatzteil an der Arbeitsmaschine vorhanden ist, jedoch aufgrund mangelnder Kenntnis von dessen Existenz oder mangelhafter Ordnung von dem jeweiligen Maschinenführer nicht gefunden und genutzt wird und letzterer sich in dem Glauben befindet, das jeweilige Ersatzteil müsse noch aufwendig aus einem jeweiligen Ersatzteillager beschafft werden.

Der vorliegenden Anmeldung liegt mithin die Aufgabe zugrunde, die Wartung einer landwirtschaftlichen Arbeitsmaschine insbesondere im Hinblick auf deren Verschleißteile zu optimieren, sodass Ausfallzeiten der Arbeitsmaschine im Arbeitsalltag auf ein Minimum reduziert werden können.

Die zugrunde liegende Aufgabe wird erfindungsgemäß mittels einer landwirtschaftlichen Arbeitsmaschine mit den Merkmalen des Anspruchs 1 gelöst. Vorteilhafte Ausgestaltungen ergeben sich aus den Unteransprüchen 2 bis 9.

Erfindungsgemäß umfasst die Arbeitsmaschine mindestens einen Ersatzteilbehälter, innerhalb dessen eine Mehrzahl von Ersatzteilen lagerbar bzw. gelagert ist. Dieser Ersatzteilbehälter umfasst mindestens eine Fixiereinrichtung, mittels derer die Ersatzteile innerhalb des Behälters fixierbar sind, sodass sie in jedem Falle bei Öffnen des Ersatzteilbehälters sich dem jeweiligen Anwender geordnet präsentieren und ein Suchen eines jeweilig erforderlichen Ersatzteils entfallen kann. Mindestens ein Ersatzteil ist mittels der Fixiereinrichtung derart fixiert, dass es bei Einwirkung einer Beschleunigung auf den Ersatzteilbehälter seine Position innerhalb des bzw. an dem Ersatzteilbehälter(s) beibehält.

Die erfindungsgemäße Arbeitsmaschine hat viele Vorteile. Zum einen ist mittels des Ersatzteilbehälters ein dedizierter Ort an der Arbeitsmaschine geschaffen, an dem Ersatzteile grundsätzlich gelagert sind und entsprechend von dem Maschinenführer im Falle des Falles aufgefunden werden können. Ein aufwändiges und zeitraubendes Suchen nach Ersatzteilen "irgendwo" an der Arbeitsmaschine entfällt damit. Zum anderen bietet die Fixiereinrichtung den wesentlichen Vorteil, dass jeweilig fixierte Ersatzteile an ihrem vorgesehenen Ort innerhalb des Ersatzteilbehälters bleiben. Das heißt, dass ein versehentliches "Hin-und-her-Rutschen" von Ersatzteilen innerhalb des Ersatzteilbehälters unterbunden ist. Hierdurch wird innerhalb des Ersatzteilbehälters eine Ordnung geschaffen, die die Übersichtlichkeit der verfügbaren Ersatzteile steigert und demzufolge eine unmittelbare Identifikation eines jeweils benötigten Ersatzteils erlaubt. Gleichzeitig ermöglicht es einen unmittelbaren Überblick über die in dem Ersatzteilbehälter gelagerten Ersatzteile, wodurch es dem Maschinenführer der Arbeitsmaschine besonders leicht gemacht wird, vor Arbeitsbeginn die Bestückung des Ersatzteilbehälters "auf einen Blick" zu prüfen. Auf diese Weise wird eine zusätzliche Sicherheit geschaffen, dass bestimmte Ersatzteile nicht versehentlich vergessen werden können und dieses Vergessen erst anschließend während des Arbeitstages auffällt, wenn es zur Vermeidung ungewünschter Stillstandzeiten der Arbeitsmaschine bereits zu spät ist.

In einer vorteilhaften Ausgestaltung der erfindungsgemäßen Arbeitsmaschine sind die Ersatzteile verschiedenen Ersatzteilgruppen zuordbar oder zugeordnet, wobei derselben Ersatzteilgruppe zugehörige Ersatzteile eine zumindest im Wesentlichen gleiche Form aufweisen. Typischerweise weisen die derselben Ersatzteilgruppe zugehörigen Ersatzteile sogar die genau gleiche Form auf. Derartige Ersatzteilgruppen können beispielsweise Klingen für einen Mähbalken eines Schneidorgans, Messer für ein Häckselorgan der Arbeitsmaschine, Doppelfinger für das Schneidorgan oder Montageteile für die Montage jeweiliger Ersatzteile an der Arbeitsmaschine umfassen. Weitere Ersatzteilgruppen sind selbstverständlich ebenso denkbar.

Weiterhin ist eine solche Arbeitsmaschine von Vorteil, deren Fixiereinrichtung des Ersatzteilbehälters mindestens eine Aufnahme umfasst, deren Form auf eine Form von Ersatzteilen mindestens einer Ersatzteilgruppe abgestimmt ist. Dieses Abstimmen der Formen der Aufnahme sowie der Ersatzteile der jeweiligen Ersatzteilgruppe hat zur Folge, dass die der Ersatzteilgruppe zugehörigen Ersatzteile zumindest im Wesentlichen, vorzugsweise vollständig, passgenau in oder an der Aufnahme lagerbar oder gelagert sind. Dabei ist es weiterhin von Vorteil, wenn die der jeweiligen Ersatzteilgruppe zugehörige Ersatzteile zumindest im Wesentlichen, vorzugsweise genau, untereinander die gleiche Form aufweisen, wobei die Form insbesondere eine Außenkontur des jeweiligen Ersatzteils betreffen kann. Die passgenaue Lagerung von Ersatzteilen mittels einer als Aufnahme ausgebildeten Fixiereinrichtung ermöglicht eine besonders einfache Beladung und Entnahme des jeweiligen Ersatzteils in den bzw. aus dem Ersatzteilbehälter, wobei gleichzeitig die jeweiligen Ersatzteile mittels der Aufnahme innerhalb des Ersatzteilbehälters in ihrer Lage fixiert sind.

Vorteilhafterweise sind sämtliche in dem Ersatzteilbehälter befindlichen Ersatzteile mittels mindestens einer jeweils zugehörigen Aufnahme passgenau gelagert oder lagerbar.

Bezogen auf die Ausgestaltung einer solchen Aufnahme einer Fixiereinrichtung kann es weiterhin von Vorteil sein, wenn die Aufnahme dazu geeignet ist, formschlüssig mit mindestens einem ihr zugeordneten Ersatzteil zusammenzuwirken, sodass ein jeweiliges Ersatzteil in Kraft übertragender Weise in oder an der Aufnahme lagerbar oder gelagert ist. Der beschriebene Formschluss kann beispielsweise eine Clip-, Klick- oder Klemmverbindung umfassen, mittels derer ein jeweiliges Ersatzteil in dem Ersatzteilbehälter verrastet wird, sodass das Ersatzteil lediglich gegen Einwirkung einer von außen aufzubringenden Kraft aus der Aufnahme entnommen werden kann. Mittels einer auf diese Weise ausgebildeten Fixiereinrichtung kann die Lagesicherheit eines jeweiligen Ersatzteils innerhalb des Ersatzteilbehälters weiter erhöht werden.

Die erfindungsgemäße Arbeitsmaschine weiter ausgestaltend hält der Ersatzteilbehälter mindestens eine, vorzugsweise mehrere, Fixiereinrichtung(en) für die folgenden Ersatzteilgruppen bereit:
i) Doppelfinger für das Schneidorgan,
ii) Klingen für das Schneidorgan,
iii) Messer für ein Häckselorgan der Arbeitsmaschine,
iv) Montageteile zur Montage übriger Ersatzteile an der Arbeitsmaschine.

Bei diesen Ersatzteilgruppen handelt es sich um die verschleißträchtigsten Teile von landwirtschaftlichen Arbeitsmaschinen, die zu Erntezwecken eingesetzt werden. Dies betrifft insbesondere Feldhäcksler und Mähdrescher. Eine Vorhaltung dieser Ersatzteilgruppen in dem Ersatzteilbehälter führt zu einer automatischen Überprüfung der Ladung von diesen Ersatzteilgruppen zugehörigen Ersatzteilen auf der jeweiligen Arbeitsmaschine, wodurch eine Mehrheit sämtlicher, durch Verschleißteile bedingter Ausfälle der jeweiligen Arbeitsmaschine mittels Ersatzteilen, die in dem so bestückten Ersatzteilbehälter gelagert sind, behoben werden können.

In einer weiterhin vorteilhaften Ausgestaltung der erfindungsgemäßen Arbeitsmaschine umfasst der Ersatzteilbehälter einen einstückigen Materialblock, wobei eine Mehrzahl von Fixiereinrichtungen, vorzugsweise sämtliche Fixiereinrichtungen, jeweils in Form von Ausnehmungen gebildet sind, die in dem Materialblock angeordnet sind. Insbesondere ist es denkbar, dass besagte Ausnehmungen mittels subtraktiver Verfahren aus dem Materialblock herausgearbeitet sind. Weiterhin ist es denkbar, den Materialblock in seiner mit Ausnehmungen versehen Form urzuformen, insbesondere von einem einstückigen Spritzgussteil zu bilden, sodass die Ausnehmungen unmittelbar mit Abschluss der Herstellung des Materialblocks in der gewünschten Form vorliegen und keine weitere Bearbeitung erforderlich ist.

In einer denkbaren Ausführungsform ist die Arbeitsmaschine von einem Mähdrescher gebildet, der mindestens ein Arbeitsorgan in Form eines Dreschorgans und mindestens ein Arbeitsorgan in Form eines Trennorgans umfasst, wobei mittels des Dreschorgans von den geschnittenen Pflanzen Früchte ablösbar sind und wobei mittels des Trennorgans abgelöste Früchte von Pflanzenresten trennbar sind.

In einer weiterhin denkbaren Ausführungsform ist die Arbeitsmaschine von einem Feldhäcksler gebildet, wobei mindestens ein Arbeitsorgan in Form eines Häckselorgans gebildet ist, mittels dessen die geschnittenen Pflanzen häckselbar sind, wobei der Feldhäcksler weiterhin mindestens ein Arbeitsorgan in Form eines Beschleunigungsorgans umfasst, mittels dessen die gehäckselten Pflanzen in Richtung eines Auswurforgans leitbar und sodann mittels des Auswurforgans aus dem Feldhäcksler auswerfbar sind.

Unabhängig von der genauen Ausgestaltung der jeweiligen Arbeitsmaschine kann es besonders vorteilhaft sein, den Ersatzteilbehälter an einer Seite der Arbeitsmaschine anzuordnen, wobei der Ersatzteilbehälter vorzugsweise in einem Höhenbereich gemessen von dem Untergrund zwischen 1,0 m und 1,6 m angeordnet ist, sodass er von einer neben der Arbeitsmaschine stehenden Person leicht zugänglich ist.

Weiter vorzugsweise ist der Ersatzteilbehälter als solcher innerhalb eines übergeordneten Lagerbehälters angeordnet, der mittels einer Haube, vorzugsweise luftdicht, verschließbar ist. Auf diese Weise ist der Ersatzteilbehälter vor äußeren Einflüssen, insbesondere Staub und Dreck, geschützt.

Die erfindungsgemäße Arbeitsmaschine ist nachstehend anhand eines Ausführungsbeispiels, das in den Figuren dargestellt ist, näher erläutert. Es zeigt:
- Fig. 1:: Einen Querschnitt durch eine erfindungsgemäße Arbeitsmaschine, die in Form eines Mähdreschers ausgebildet ist,
- Fig. 2:: Eine isometrische Ansicht eines Ersatzteilbehälters, der frei von Ersatzteilen ist,
- Fig. 3:: Eine isometrische Ansicht eines weiteren Ersatzteilbehälters, der mit einer Mehrzahl von Ersatzteilen bestückt ist,
- Fig. 4:: Eine Draufsicht eines weiteren Ersatzteilbehälters, dessen Fixiereinrichtungen vollständig mit Ersatzteilen bestückt sind,
- Fig. 5:: Eine isometrische Ansicht eines Lagerbehälters, dessen Aufnahmemulde zur Aufnahme eines Ersatzteilbehälters vorbereitet ist, und
- Fig. 6:: Den Lagerbehälter gemäß Figur 5, wobei ein Ersatzteilbehälter in die Aufnahmemulde eingelegt ist.

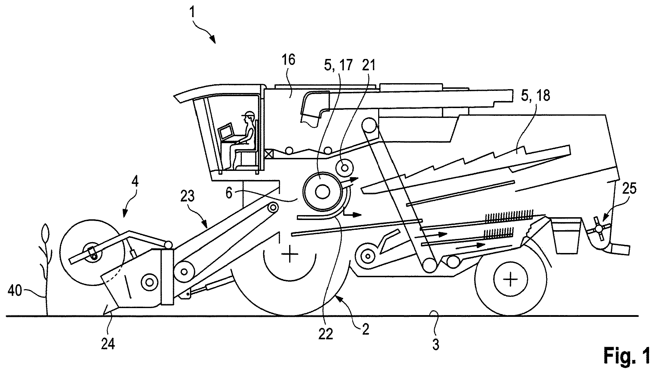

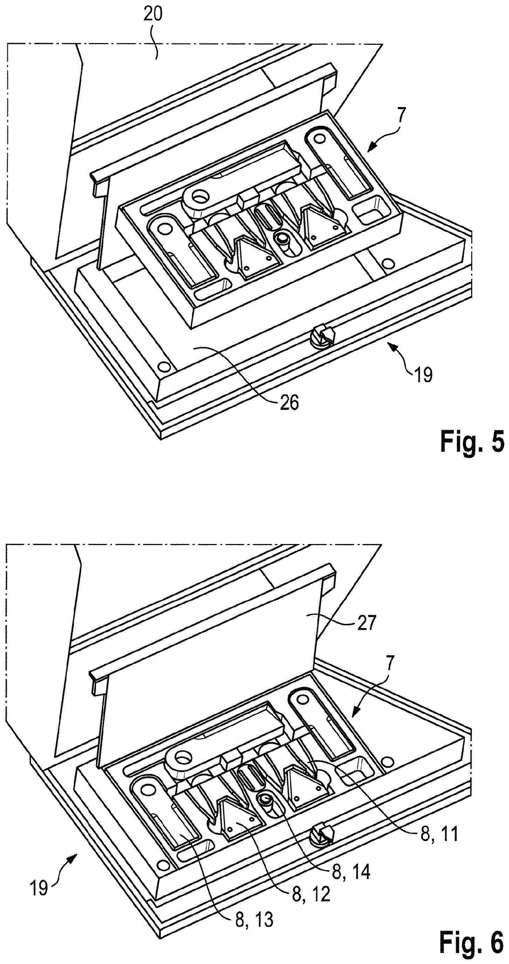

Ein Ausführungsbeispiel, das in den **Figuren 1 bis 6** dargestellt ist, umfasst eine erfindungsgemäße Arbeitsmaschine **1**, die hier von einem Mähdrescher gebildet ist. Die Arbeitsmaschine **1** weist ein Fahrwerk **2** auf, mittels dessen sie auf einem Untergrund **3** fahrbar ist. Das Fahrwerk **2** umfasst in dem gezeigten Beispiel vier Rundreifen. Weiterhin umfasst die Arbeitsmaschine **1** ein Schneidorgan **4**, das hier zum Schneiden von Getreidepflanzen ausgebildet ist. Hierzu weist das Schneidorgan **4** insbesondere einen bodennah angeordneten Mähbalken **24** auf, mittels dessen jeweils zu schneidende Pflanzen bodennah abgeschnitten werden können. Die geschnittenen Pflanzen werden sodann mittels eines Schrägförderers **23** in Richtung auf ein als Dreschorgan **17** ausgebildetes Arbeitsorgan **5** geleitet. Mittels des Dreschorgans **17** werden Früchte von den geschnittenen Pflanzen abgelöst und dadurch von verbleibenden Pflanzenresten getrennt. Ein Großteil der auf diese Weise abgelösten Früchte wird unmittelbar durch einen Dreschkorb **22** von den Pflanzenresten abgeführt, während verbleibende Früchte gemeinsam mit den Pflanzenresten über eine Wendetrommel **21** einem dem Dreschorgan **17** nachgeschalteten Arbeitsorgan 5 zugeleitet werden, das in Form eines Trennorgans **18** ausgebildet ist. Dieses Trennorgan **18** ist hier von einem Hordenschüttler gebildet, mittels dessen die verbliebenen abgelösten Früchte von den Pflanzenresten trennbar sind. Die Pflanzenreste werden schließlich an einer Rückseite der Arbeitsmaschine **1** ausgeworfen, wobei in dem gezeigten Beispiel ein Häckselorgan **25** zum Einsatz kommt, mittels dessen die Pflanzenreste vor dem Auswerfen aus der Arbeitsmaschine **1** gehäckselt werden. Die gewonnenen Früchte werden indes in einem Ernteguttank **16** an der Arbeitsmaschine **1** gelagert. Zur Versorgung der einzelnen Arbeitsorgane **5** und sonstigen Vorrichtungen an der Arbeitsmaschine **1** mit Energie umfasst letztere eine Verbrennungskraftmaschine **6**, die hier von einem Dieselaggregat gebildet ist.

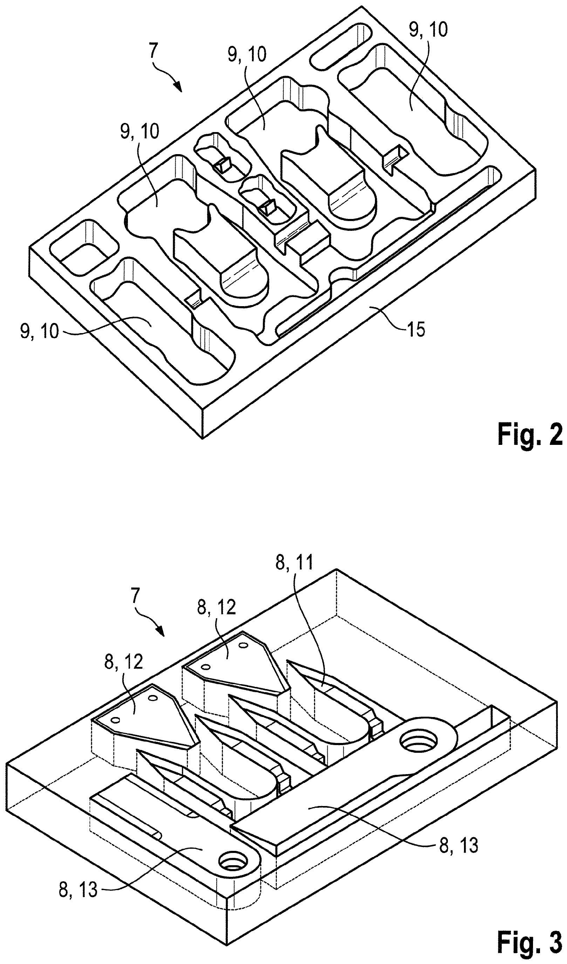

Verschiedene Komponenten der Arbeitsmaschine **1** unterliegen während des Arbeitseinsatzes einem besonders hohen Verschleiß. Dies betrifft beispielsweise Komponenten des Schneidorgans **4** sowie des Häckselorgans **25**. Während eines Arbeitstages ist grundsätzlich damit zu rechnen, dass zumindest einzelne Teile dieser Arbeitsorgane repariert und/oder ausgewechselt werden müssen. Entsprechend ist es regelmäßig erforderlich, Ersatzteile **8** vorzusehen, sodass im Bedarfsfall eine zügige Reparatur und damit verbunden eine kurze Stillstandzeit der Arbeitsmaschine **1** realisiert werden kann. Um ein Ersatzteilmanagement an der Arbeitsmaschine **1** zu verbessern, umfasst letztere erfindungsgemäß einen Ersatzteilbehälter **7**, der beispielsweise in einer in den **Figuren 2 bis 6** dargestellten Ausgestaltungen ausgeführt sein kann.

Ein solcher Ersatzteilbehälter **7** ist dazu geeignet, eine Mehrzahl von Ersatzteilen **8** vorzuhalten, wobei der Ersatzteilbehälter **7** in dem gezeigten Beispiel über eine Mehrzahl von Fixiereinrichtungen **9** verfügt, mittels derer jeweilige Ersatzteile **8** in bzw. an dem Ersatzteilbehälter **7** fixierbar sind. "Fixeren" bedeutet in diesem Zusammenhang, dass die jeweiligen Ersatzteile **8** derart in oder an dem Ersatzteilbehälter **7** festgelegt sind, dass sie infolge einer auf den Ersatzteilbehälter **7** wirkenden Beschleunigung sich nicht unkontrolliert hin und her bewegen können, sondern ihre Lage relativ zu dem Ersatzteilbehälter **7** beibehalten.

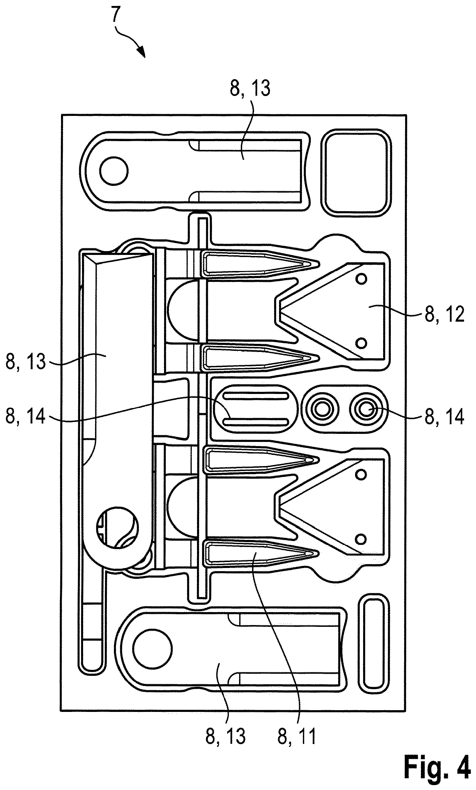

In dem gezeigten Beispiel sind die Fixiereinrichtungen **9** von Ausnehmungen **10** gebildet, die wiederum passgenau an jeweilige Ersatzteile **8** angepasst sind. Die Fixiereinrichtungen **9** unterscheiden sich dabei darin, dass sie an verschiedene Ersatzteilgruppen angepasst sind, denen wiederum jeweils mehrere Ersatzteile **8** zugehörig sein können. Eine entsprechende Ausgestaltung ergibt sich insbesondere aus den **Figuren 3** **und** **4****.** Die dort dargestellten Ersatzteilbehälter **7** umfassen Aufnahmen **10**, die für verschiedene Ersatzteilgruppen vorgesehen sind. Als solche sind hier jeweils zwei Aufnahmen **10** zu nennen, die jeweils für eine Mehrzahl von Klingen **12** geeignet sind, das heißt in ihrer Form derart an Klingen **12** angepasst sind, dass letztere passgenau in die Aufnahme **10** eingelegt werden können bzw. eingelegt sind. Die als Klingen **12** ausgebildeten Ersatzteile **8** sind demzufolge gemeinsam einer Ersatzteilgruppe zugehörig. Die Klingen **12** können insbesondere an dem Mähbalken **24** verwendet werden. Eine weitere Ersatzteilgruppe umfasst Messer **13**, die an den Häckselorgan **25** eingesetzt werden können. Ebenfalls umfasst der hier beispielhaft gezeigte Ersatzteilbehälter Aufnahmen **10** für sogenannte Doppelfinger **11**, die gleichfalls an dem Mähbalken **24** eingesetzt werden können. Auch ist eine Aufnahme **10** für Montageteile **14** vorgesehen, die beispielsweise Schrauben, Muttern und Unterlegscheiben umfassen können. Entscheidend ist, dass der Ersatzteilbehälter **7** verschiedene Fixiereinrichtungen **9** aufweist, die jeweils auf eine Ersatzteilgruppe zugeschnitten sind, sodass Ersatzteile **8**, die der jeweiligen Ersatzteilgruppe zugehörig sind, mittels der jeweiligen Fixiereinrichtung **9** lagerbar sind. Auf diese Weise sind die Ersatzteile **8** an bzw. in dem Ersatzteilbehälter **7** fixiert und ermöglichen zudem eine Kontrolle der Bestückung des Ersatzteilbehälters **7** auf einen Blick.

In einer vorteilhaften Ausgestaltung umfasst die Arbeitsmaschine zudem einen Lagerbehälter **19**, der eine Aufnahmemulde **26** für einen Ersatzteilbehälter **7** sowie eine schwenkbare Haube **20** aufweist. Der Lagerbehälter **19** kann insoweit von Vorteil sein, als er den Ersatzteilbehälter **7** vor der Einwirkung von Staub, Wasser und sonstigem Dreck schützt. Insbesondere kann der Ersatzteilbehälter **7** mittels des Lagerbehälters **19** an einer Seite der Arbeitsmaschine **1** gelagert sein, sodass der Ersatzteilbehälter **7** besonders einfach und zügig zugänglich ist. In dem gezeigten Beispiel ist die Aufnahmemulde **26** zudem mittels eines zusätzlichen Deckels **27** verschließbar, sodass ein Herausfallen der Ersatzteile **8** aus ihren Fixiereinrichtungen **9** nach oben, das heißt in eine Richtung senkrecht zu einer Grundfläche des Ersatzteilbehälters **7**, unterbunden ist.

### Bezugszeichenliste

- 1: Arbeitsmaschine
- 2: Fahrwerk
- 3: Untergrund
- 4: Schneidorgan
- 5: Arbeitsorgan
- 6: Verbrennungskraftmaschine
- 7: Ersatzteilbehälter
- 8: Ersatzteil
- 9: Fixiereinrichtung
- 10: Aufnahme
- 11: Doppelfinger
- 12: Klinge
- 13: Messer
- 14: Montageteil
- 15: Materialblock
- 16: Ernteguttank
- 17: Dreschorgan
- 18: Trennorgan
- 19: Lagerbehälter
- 20: Haube
- 21: Wendetrommel
- 22: Dreschkorb
- 23: Schrägförderer
- 24: Mähbalken
- 25: Häcksler
- 26: Aufnahmemulde
- 27: Deckel

## Patentansprüche

1. Landwirtschaftliche Arbeitsmaschine (1), umfassend
- mindestens ein Fahrwerk (2) zur Fortbewegung der Arbeitsmaschine (1) auf einem Untergrund (3),
- mindestens ein Schneidorgan (4) zum Schneiden von Pflanzen,
- mindestens ein Arbeitsorgan (5) zur Bearbeitung geschnittener Pflanzen, sowie
- mindestens eine Verbrennungskraftmaschine (6) zur Versorgung einzelner Komponenten der Arbeitsmaschine (1) mit Energie,
- mindestens einen Ersatzteilbehälter (7), innerhalb dessen eine Mehrzahl von Ersatzteilen (8) lagerbar oder gelagert ist, **dadurch gekennzeichnet, dass**
der Ersatzteilbehälter (7) eine Fixiereinrichtung (9) umfasst, mittels derer Ersatzteile (8) derart fixierbar sind, dass die Ersatzteile (8) bei Einwirkung einer Beschleunigung auf den Ersatzteilbehälter (7) ihre Position innerhalb des Ersatzteilbehälters (7) beibehalten, und die Ersatzteile (8) Ersatzteile mindestens eines Schneidorgans (4) und Ersatzteile mindestens eines Arbeitsorgans (5) umfassen.

2. Arbeitsmaschine (1) nach Anspruch 1, **dadurch gekennzeichnet, dass** die Ersatzteile (8) verschiedenen Ersatzteilgruppen zuordbar oder zugeordnet sind, wobei derselben Ersatzteilgruppe zugehörige Ersatzteile (8) eine zumindest im Wesentlichen, vorzugsweise genau, gleiche Form aufweisen.

3. Arbeitsmaschine (1) nach Anspruch 2, **dadurch gekennzeichnet, dass** die Fixiereinrichtung (9) mindestens zwei Aufnahmen (10) umfasst, deren Form auf je mindestens eine Ersatzteilgruppe abgestimmt ist, wobei die der Ersatzteilgruppe zugehörigen Ersatzteile (8) zumindest im Wesentlichen, vorzugsweise genau, untereinander die gleiche Form aufweisen, sodass der Ersatzteilgruppe zugehörige Ersatzteile (8) passgenau in oder an der Aufnahme (10) lagerbar oder gelagert sind.

4. Arbeitsmaschine (1) nach Anspruch 3, **dadurch gekennzeichnet, dass** sämtliche in dem Ersatzteilbehälter (7) befindlichen Ersatzteile (8) mittels mindestens einer jeweils zugehörigen Aufnahme (10) passgenau lagerbar oder gelagert sind.

5. Arbeitsmaschine (1) nach Anspruch 3 oder 4, **dadurch gekennzeichnet, dass** die Fixiereinrichtung (9) mindestens eine Aufnahme (10) aufweist, die dazu geeignet ist, formschlüssig mit mindestens einem ihr zugeordneten Ersatzteil (8) zusammenzuwirken, sodass das Ersatzteil (8) in Kraft übertragender Weise in oder an der Aufnahme (10) lagerbar oder gelagert ist.

6. Arbeitsmaschine (1) nach einem der Ansprüche 2 bis 5, **dadurch gekennzeichnet, dass** der Ersatzteilbehälter (7) eine oder mehrere Fixiereinrichtungen (9) für zumindest eine, vorzugsweise sämtliche, der folgenden Ersatzteilgruppen bereithält:
i) Doppelfinger (11) für das Schneidorgan (4),
ii) Klingen (12) für das Schneidorgan (4),
iii) Messer (13) für ein Häckselorgan der Arbeitsmaschine (1),
iv) Montageteile (14) zur Montage übriger Ersatzteile (8) an der Arbeitsmaschine (1).

7. Arbeitsmaschine (1) nach einem der Ansprüche 1 bis 6, **dadurch gekennzeichnet, dass** der Ersatzteilbehälter (7) einen einstückigen Materialblock (15) umfasst, wobei eine Mehrzahl von Fixiereinrichtungen (9), vorzugsweise sämtliche Fixiereinrichtungen (9), in Form von Ausnehmungen (10) in dem Materialblock (15) ausgebildet sind.

8. Arbeitsmaschine (1) nach einem der Ansprüche 1 bis 7, **dadurch gekennzeichnet, dass** die Arbeitsmaschine (1) von einem Mähdrescher gebildet ist, der mindestens ein Arbeitsorgan (5) in Form eines Dreschorgans (17) und mindestens ein Arbeitsorgan (5) in Form eines Trennorgans (18) umfasst, wobei mittels des Dreschorgans (17) von den geschnittenen Pflanzen Früchte ablösbar sind und wobei mittels des Trennorgans (18) abgelöste Früchte von Pflanzenresten trennbar sind.

9. Arbeitsmaschine (1) nach einem der Ansprüche 1 bis 8, **dadurch gekennzeichnet, dass** der Ersatzteilbehälter (7) an einer Seite der Arbeitsmaschine (1) angeordnet ist, wobei der Ersatzteilbehälter (7) innerhalb eines Lagerbehälters (19) angeordnet ist, der vorzugsweise staubdicht und/oder wasserdicht verschließbar ist.

## Claims

1. An agricultural working machine (1), comprising
- at least one chassis (2) for moving the working machine (1) on a substrate (3),
- at least one cutting unit (4) for cutting plants,
- at least one operating unit (5) for processing cut plants, as well as
- at least one combustion engine (6) for supplying individual components of the working machine (1) with energy,
- at least one replacement part receptacle (7), inside which a plurality of replacement parts (8) can be stored or are stored, **characterized in that**
the replacement part receptacle (7) comprises a securing device (9), by means of which replacement parts (8) can be secured in a manner such that they maintain their position inside the replacement part receptacle (7) under the influence of an acceleration on the replacement part receptacle (7), and the replacement parts (8) comprise replacement parts for at least one cutting unit (4) and replacement parts for at least one operating unit (5).

2. The working machine (1) according to claim 1, **characterized in that** the replacement parts (8) are attributed to or can be attributed to different replacement part groups, wherein replacement parts (8) belonging to the same replacement part group have an at least substantially identical shape, preferably an exactly identical shape.

3. The working machine (1) according to claim 2, **characterized in that** the securing device (9) comprises at least two compartments (10) the shape of which is matched to that of at least one replacement part group, wherein the replacement parts (8) belonging to the replacement part group are at least substantially of identical shape, preferably of exactly identical shape, so that the replacement parts (8) belonging to the replacement part group can be stored or are stored in or on the compartment (10) with an exact fit.

4. The working machine (1) according to claim 3, **characterized in that** all of the replacement parts (8) located in the replacement part receptacle (7) can be stored or are stored with an exact fit by means of at least one compartment (10) respectively associated therewith.

5. The working machine (1) according to claim 3 or claim 4, **characterized in that** the securing device (9) has at least one compartment (10) which is suitable for cooperation in an interlocking manner with at least one replacement part (8) associated therewith, so that the replacement part (8) can be stored or is stored in or on the compartment (10) in a force-transmitting manner.

6. The working machine (1) according to one of claims 2 to 5, **characterized in that** the replacement part receptacle (7) has provision for one or more securing devices (9) for at least one, preferably all of the following replacement part groups:
i) double fingers (11) for the cutting unit (4),
ii) blades (12) for the cutting unit (4),
iii) knives (13) for the chopping means of the working machine (1),
iv) mounting parts (14) for mounting other replacement parts (8) on the working machine (1).

7. The working machine (1) according to one of claims 1 to 6, **characterized in that** the replacement part receptacle (7) comprises a one-piece block of material (15), wherein a plurality of securing devices (9), preferably all of the securing devices (9), are constructed in the shape of recesses (10) in the block of material (15).

8. The working machine (1) according to one of claims 1 to 7, **characterized in that** the working machine (1) is formed by a combine harvester which comprises at least one operating unit (5) in the form of a threshing unit (17) and at least one operating unit (5) in the form of a separating unit (18) wherein fruit can be detached from the cut plants by means of the threshing unit (17) and wherein detached fruit can be separated from plant residues by means of the separating unit (18).

9. The working machine (1) according to one of claims 1 to 8, **characterized in that** the replacement part receptacle (7) is disposed on one side of the working machine (1), wherein the replacement part receptacle (7) is disposed inside a storage receptacle (19) which is preferably impenetrable to dust and/or impervious to water.

## Revendications

1. Machine de travail agricole (1) incluant
- au moins un train de roulement (2) pour le déplacement de la machine de travail (1) sur un support (3),
- au moins un organe de coupe (4) pour couper des plantes,
- au moins un organe de travail (5) pour traiter des plantes coupées, ainsi que
- au moins une machine à combustion interne (6) pour alimenter des composants individuels de la machine de travail (1) en énergie,
- au moins un conteneur de pièces de rechange (7) à l'intérieur duquel une pluralité de pièces de rechange (8) est stockable ou stockée,
**caractérisée en ce que**
le conteneur de pièces de rechange (7) inclut un équipement d'immobilisation (9) au moyen duquel des pièces de rechange (8) peuvent être immobilisées de façon que, en cas d'action d'une accélération sur le conteneur de pièces de rechange (7), les pièces de rechange (8) conservent leur position à l'intérieur du conteneur de pièces de rechange (7),
et les pièces de rechange (8) incluent des pièces de rechange au moins d'un organe de coupe (4) et des pièces de rechange au moins d'un organe de travail (5).

2. Machine de travail (1) selon la revendication 1, **caractérisée en ce que** les pièces de rechange (8) sont affectables ou affectées à différents groupes de pièces de rechange, des pièces de rechange (8) appartenant au même groupe de pièces de rechange présentant une forme au moins sensiblement, de préférence exactement identique.

3. Machine de travail (1) selon la revendication 2, **caractérisée en ce que** l'équipement d'immobilisation (9) inclut au moins deux logements (10) dont la forme est adaptée respectivement à au moins un groupe de pièces de rechange, les pièces de rechange (8) appartenant au groupe de pièces de rechange présentant entre elles sensiblement, de préférence exactement la même forme, de sorte que des pièces de rechange (8) appartenant au groupe de pièces de rechange sont logeables ou logées avec un ajustement précis dans ou contre le logement (10).

4. Machine de travail (1) selon la revendication 3, **caractérisée en ce que** toutes les pièces de rechange (8) se trouvant dans le conteneur de pièces de rechange (7) sont logeables ou logées avec un ajustement précis au moyen d'au moins un logement respectivement associé (10).

5. Machine de travail (1) selon la revendication 3 ou 4, **caractérisée en ce que** l'équipement d'immobilisation (9) comporte au moins un logement (10) qui est apte à coopérer par complémentarité de formes avec au moins une pièce de rechange (8) qui y est associée, de façon que la pièce de rechange (8) soit logeable ou logée dans ou contre le logement (10) de façon à transmettre une force.

6. Machine de travail (1) selon une des revendications 2 à 5, **caractérisée en ce que** le conteneur de pièces de rechange (7) tient à disposition un ou plusieurs équipements d'immobilisation (9) pour au moins un des, de préférence tous les groupes de pièces de rechange suivants :
i) doubles doigts (11) pour l'organe de coupe (4),
ii) lames (12) pour l'organe de coupe (4),
iii) couteaux (13) pour un organe de hachage de la machine de travail (1),
iv) pièces de montage (14) pour le montage d'autres pièces de rechange (8) sur la machine de travail (1).

7. Machine de travail (1) selon une des revendications 1 à 6, **caractérisée en ce que** le conteneur de pièces de rechange (7) inclut un bloc de matière d'une seule pièce (15), une pluralité d'équipements d'immobilisation (9), de préférence tous les équipements d'immobilisation (9) étant conçus en forme d'évidements (10) dans le bloc de matière (15).

8. Machine de travail (1) selon une des revendications 1 à 7, **caractérisée en ce que** la machine de travail (1) est formée par une moissonneuse-batteuse qui inclut au moins un organe de travail (5) en forme d'organe de battage (17) et au moins un organe de travail (5) en forme d'organe de séparation (18), des fruits pouvant être détachés des plantes coupées au moyen de l'organe de battage (17) et des fruits détachés pouvant être séparés des résidus de plantes au moyen de l'organe de séparation (18).

9. Machine de travail (1) selon une des revendications 1 à 8, **caractérisée en ce que** le conteneur de pièces de rechange (7) est disposé contre un côté de la machine de travail (1), le conteneur de pièces de rechange (7) étant disposé à l'intérieur d'un conteneur de stockage (19) qui peut être fermé de préférence de manière étanche à la poussière et/ou de manière étanche à l'eau.
